# EUROPEAN PATENT APPLICATION

(11) **EP 4 578 794 A1**
(43) Date of publication of application: **02.07.2025**
(21) Application number: 24203871.9
(22) Date of filing: 01.10.2024
(51) Int. Cl.: B65D 19/14, B65D 19/44, B65D 25/10

(54) **PACKAGING STRUCTURE FOR BATTERY PACK**

(30) Priority: 28.12.2023 CN 202323661942 U; 19.06.2024 WO PCT/CN2024/100183
(71) Applicant: Eve Energy Storage Co., Ltd, Wuhan, Hubei 430074 (CN)
(72) Inventor: XIONG, Heming, Wuhan, Hubei 430074 (CN); LU, Weijun, Wuhan, Hubei 430074 (CN)
(74) Representative: Murgitroyd & Company

(57) **Abstract**

A package structure for a battery pack is provided. The package structure for the battery pack includes a tray structure and a cover body, the tray structure includes a tray body and a support portion. At least a part of the support portion protrudes from a periphery of the tray body in a planar extension direction of the tray body. The support portion cooperates with the tray body to form a groove located at the periphery of the tray body. The cover body is arranged on a first side of the tray body. A cavity is formed on a side, facing the tray body, of the cover body. The battery pack is located on the first side of the tray body and is accommodated in the cavity. At least a part of the cover body is lapped with the groove, and the tray body is accommodated in the cavity.

## Description

### TECHNICAL FIELD

The present application relates to the technical field of battery packs, and in particular to a packaging structure for a battery pack.

### BACKGROUND

In the prior art, wooden boxes are often used for transportation and packaging of new energy battery packs. The structure of a traditional wooden box includes a top cover of the box and a tray. An outer short side plate of the top cover of the box is lengthened and is fixed to load-bearing blocks of the tray with wooden screws, and the lengthened outer short side plate is located at an outer side of the wooden box.

However, such an arrangement method leads to uneven surfaces of the wooden box, and makes it difficult to place the energy battery packs properly during their packaging, and also unfavorable for the placement and stacking of wooden boxes in bulk after packaging. During long-distance transportation of battery packs, due to the bumpy journey, the wooden box may rollover, which can easily cause collisions between the battery packs and the wooden box or between the battery packs and the ground, resulting in accidents such as battery leakage, spontaneous combustion, and explosion.

### SUMMARY

A first aspect of the present application provides a packaging structure for a battery pack, including:
a tray structure including a tray body and a support portion, the tray body including a first side and a second side opposite to the first side in a first direction, the tray body extending along a plane where a second direction and a third direction are located; the first side of the tray body being configured for installing a battery pack; the support portion being fixedly connected to the second side of the tray body, at least a part of the support portion protruding from a periphery of the tray body in a planar extension direction of the tray body; the support portion cooperating with the tray body to form a groove located at the periphery of the tray body; and the first direction, the second direction, and the third direction intersecting with each other in pairs; and
a cover body arranged on the first side of the tray body, a cavity being formed on a side, facing the tray body, of the cover body, the battery pack being located on the first side of the tray body and being accommodated in the cavity, at least a part of the cover body being lapped with the groove, and the tray body being accommodated in the cavity.

In the embodiments of the present application, the battery pack is placed on the first side of the tray body and the cover body is covered on the tray structure to complete the assembly of the battery pack and the packaging structure for the battery pack, at least a part of the cover body is lapped on the tray structure to complete the positioning installation between the cover body and the tray structure. Compared to the prior art that the shape of the top cover for the box is needed to be adjusted to complete the assembly between the top cover for the box and the tray, in the technical solutions of the embodiments of the present application, the shape of the cover body is not needed to be changed, and the cover body and the tray structure can be limited by the groove formed by the combination of the tray body and the support portion during assembly, therefore, the overall surface of the cover body and the tray structure is flat, which is benefit for the placement, stacking, and transportation of multiple packaging structures for the battery pack.

### BRIEF DESCRIPTION OF THE DRAWINGS

FIG. 1 is a three-dimensional schematic diagram of a packaging structure for a battery pack according to the present application;
FIG. 2 is an exploded schematic diagram of a packaging structure for a battery pack according to the present application;
FIG. 3 is an enlarged schematic diagram of part A in FIG. 2;
FIG. 4 is an exploded schematic diagram of a packaging structure for a battery pack according to the present application;
FIG. 5 is a schematic sectional view of a packaging structure for a battery pack according to the present application;
FIG. 6 is a three-dimensional schematic diagram of a cover body according to the present application;
FIG. 7 is a three-dimensional schematic diagram of a tray structure according to the present application;
FIG. 8 is a schematic sectional view of a cover body according to the present application;
FIG. 9 is a schematic diagram of a tray structure according to the present application.

### Reference numerals in the drawings:

100, packaging structure for battery pack; 1, tray structure; 11, tray body; 12, support portion; 1A, first side; 1B, second side; 2, groove; 3, cover body; 3A, cavity; 4, battery pack; 5, limit portion; 6, first buffer member; 7, first packing belt; 8, protective member; 9, second buffer member; 12A, support block; 12B, first plate member; 10, second plate member; 31, first sub-part; 32, second sub-part; 13, second packing belt; 14, first side plate; 15, second side plate.

### DETAILED DESCRIPTION

In the description of this application, unless otherwise expressly specified and limited, terms "connect", "couple", "fix" should be interpreted in a broader way. For example, it can be a fixed connection, a detachable connection, or an integrated form. It can be a mechanical connection, or an electrical connection. It can be a direct connection, an indirect connection through an intermediate medium, a communication within two components, or an interaction between two components. For persons skilled in the art, the specific meaning of the above terms in this application may be understood on a case-by-case basis.

In this application, unless otherwise expressly specified and limited, a first feature being "on" or "below" a second feature may indicate a direct contact between the first and second features, or an indirect contact between the first and second features which are connected by another feature therebetween. Furthermore, the first feature being "on", "above" or "over" the second feature indicates that the first feature is directly above or diagonally above the second feature, or simply indicates that the first feature is at a higher level than the second feature. The first feature being "below", "under", and "underneath" the second feature indicates that the first feature is directly below or diagonally below the second feature, or simply indicates that the first feature is at a lower level than the second feature.

In the description of this embodiment, orientation or position relationship indicated by terms "up", "down", "left", "right", "front", "back" is based on the orientation or position relationship shown in the attached drawings, only for the purpose of facilitating description and simplifying operations, but not indicating or implying that the device or element referred to must have a particular orientation, or is constructed and operated in the particular orientation. Therefore, the orientation or position relationship is not limited thereto. In addition, terms "first" and "second" are used only to literally distinguish in terms of description and have no special meanings.

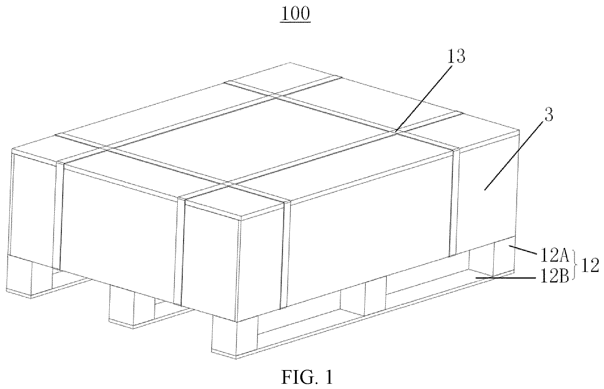

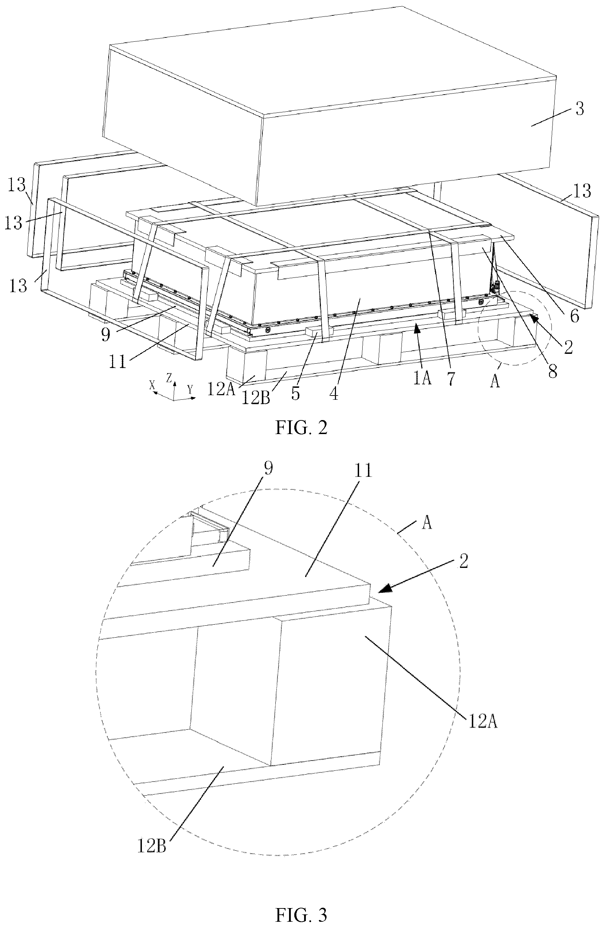

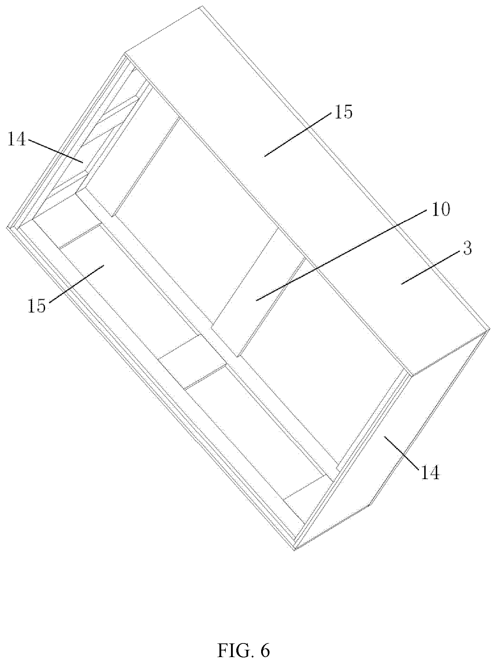

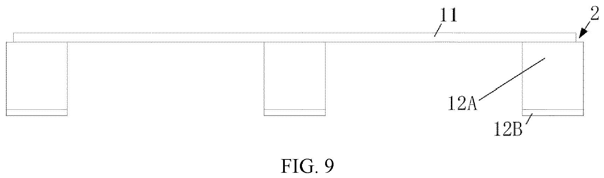

The present application provides a packaging structure for a battery pack. FIG. 1 to FIG. 9 show embodiments of the present application. In FIG. 2, a Z direction is referred to a first direction, a Y direction is referred to a second direction, and a X direction is referred to a third direction. The first, second, and third directions intersect with each other in pairs, and the angle between the first, second, and third directions intersecting with each other in pairs can be 80 degrees, 85 degrees, 90 degrees, 95 degrees, or 100 degrees. In the following embodiments, the angle between either two of the first, second, and third directions is described as 90 degrees.

Referring to FIG. 1 to FIG. 4, a packaging structure 100 for a battery pack includes a tray structure 1 and a cover body 3. The tray structure 1 includes a tray body 11 and a support portion 12. The tray body 11 includes a first side 1A and a second side 1B opposite to the first side 1A in the first direction Z. The tray body 11 extends along a plane where the second direction Y and the third direction X are located. The first side 1A of the tray body 11 is configured for installing a battery pack 4, and the support portion 12 is fixedly connected to the second side 1B of the tray body 11. At least a part of the support portion 12 protrudes from a periphery of the tray body 11 in planar extension direction of the tray body 11. The support portion 12 cooperates with the tray body 11 to form a groove 2 located at the periphery of the tray body 11. The cover body 3 body is located on the first side 1A of the tray body 11. A cavity 3A is formed on a side, facing the tray body 11, of the cover body 3. The battery pack 4 is located on the first side 1A of the tray body 11 and is accommodated in the cavity 3A. At least a part of the cover body 3 is lapped with the groove 2, and the tray body 11 is accommodated in the cavity 3A.

In the embodiments of the present application, the battery pack 4 is placed on the first side 1A of the tray body 11 and the tray structure 1 is covered with the cover body 3 to complete the assembly of the battery pack 4 and the packaging structure 100 for the battery pack. At least a part of the cover body 3 is lapped on the tray structure 1 to complete the positioning installation between the cover body 3 and the tray structure 1. Compared to the prior art that the shape of the top cover for the box is needed to be adjusted to complete the assembly between the top cover for the box and the tray, in the technical solutions of the embodiments of the present application, the shape of the cover body 3 is not needed to be changed, and the cover body 3 and the tray structure 1 can be limited by the groove 2 formed by the combination of the tray body 11 and the support portion 12 during assembly, therefore, the overall surface of the cover body 3 and the tray structure 1 is flat, which is benefit for the placement, stacking, and transportation of multiple packaging structures 100 for the battery pack.

It can be understood that, the overall surface of the cover body 3 and the tray structure 1 is flat, when the tray body 11 is accommodated in the cavity 3A, the overall aesthetics of the packaging structure 100 for the battery pack is improved.

Referring to FIG. 2, FIG. 3, and FIG. 9, it should be noted that the groove 2 is automatically formed during the assembly of the tray body 11 and the support portion 12. Therefore, there is no need to individually prepare the groove 2 after the assembly of the tray body 11 or the support portion 12, thereby the process of manufacturing the packaging structure 100 for the battery pack is significantly reduced. Similarly, the structural strength of the groove 2 formed by the combination of the support portion 12 and the tray body 11 is higher than the structural strength of the groove 2 that is formed in one of the tray body 11 and the support portion 12. That is, in case that the groove 2 is formed in one of the tray body 11 and the support portion 12, a portion of the tray body 11 or the support portion 12 is hollowed out, resulting in a decrease in the structural strength of the tray body 11 or the support portion 12 while forming the groove 2.

In the embodiments of the present application, in order to facilitate the stacking and transportation of the packaging structure 100 for the battery pack, the cover body 3 and the tray body 11 are both in a shape of rectangle. Compared to other shapes such as circle or irregular shape, the cover body 3 and the tray body 11 in a shape of rectangle can effectively improve the space utilization of the packaging structure 100 for the battery pack during the transportation.

Referring to FIG. 2, the tray body 11 extends along a plane where the second direction Y and the third direction X are located, and thus a first side 1A facing the cover body 3 is formed for installing the battery pack 4. The periphery of the tray body 11 refers to both opposite sides of the tray body 11 in the second direction Y and both opposite sides of the tray body 11 in the third direction X. At least a part of the support portion 12 protrudes from the periphery of the tray body 11. That is, in the plane where the second direction Y and the third direction X are located, an area occupied by the support portion 12 is larger than an area occupied by the tray body 11. Moreover, the support portion 12 can be directly observed in the first direction Z from the cover body 3 to the tray structure 1.

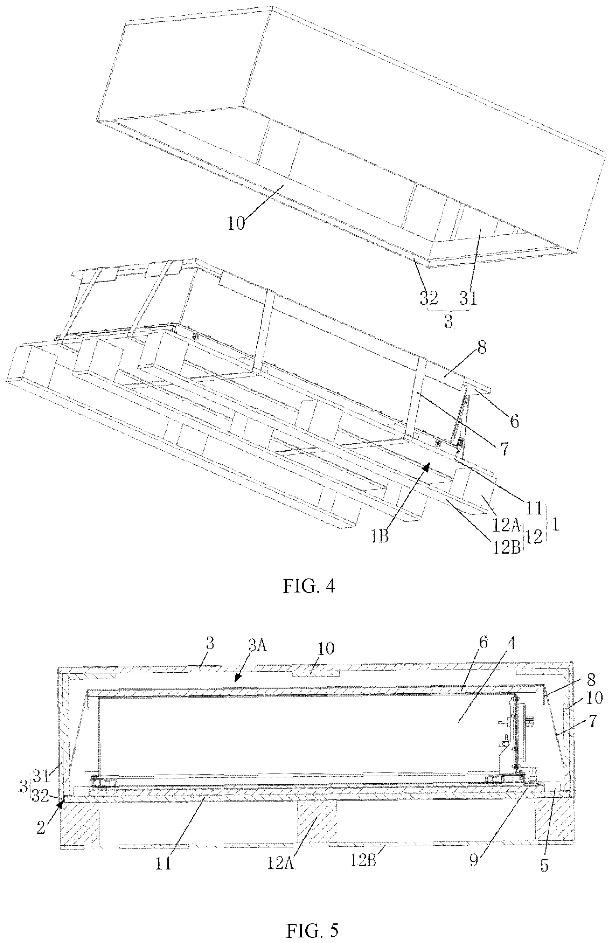

Referring to FIG. 2 and FIG. 5, in some embodiments of the present application, multiple limit portions 5 are arranged on the packaging structure 100 for the battery pack. The multiple limit portions 5 are fixed to the first side 1A of the tray body 11 and limit the movement of the battery pack 4. In this embodiment, in order to prevent the battery pack 4 from moving in the extension direction of the tray body 11 when placed on the first side 1A, the multiple limit portions 5 are arranged on the periphery of the battery pack 4 to limit the movement of the battery pack 4 in the second direction Y and the third direction X. The multiple limit portions 5 are arranged on the tray body 11, and the multiple limit portions 5 cooperates with the tray body 11 to enclose an installation area for the battery pack 4. The battery pack 4 is in a shape of rectangle, and has four sides in the second direction Y and the third direction X. Therefore, two limit portions 5 are arranged on each side of the battery pack 4. The two limit portions 5 located on one side of the battery pack 4 are spaced apart from each other.

In some embodiments of the present application, a first buffer member 6 and at least one first packing belt 7 are provided for the packaging structure 100 of the battery pack. The first buffer member 6 is located on a side, facing away from the tray body 11 in the first direction Z, of the battery pack 4. The first packing belt 7 is arranged around the tray body 11 and the battery pack 4. The first buffer member 6 is located between the first packing belt 7 and the battery pack 4. In this embodiment, by providing the first packing belt 7, the movement of the battery pack 4 in the first direction Z can be limited. The first buffer member 6 arranged on a side of the battery pack 4 in the first direction Z can buffer and reduce shock of the battery pack 4 in the first direction Z. Meanwhile, the first buffer member 6 covers a side, away from the tray body 11 in the first direction Z, of the battery pack 4, which can avoid the first packing belt 7 on this side from directly contacting the battery pack 4, causing scratches, damage, and indentations on the battery pack 4. It can be understood that in case that the first packing belt 7 comes into direct contact with the battery pack 4, due to a small contact area between the first packing belt 7 and the battery pack 4, it is easy to cause scratches, damages, and indentations on a paint surface of the contact area between the first packing belt 7 and the battery pack 4 when the battery pack 4 is subjected to a force in the first direction Z. In an embodiment of the present application, four first packing belts 7 are provided with two first packing belts 7 in a group. The two groups of first packing belts 7 respectively wrap around the tray body 11 and the battery pack 4 in the second direction Y and the third direction X. The two first packing belts 7 in the same group are spaced apart from each other to ensure the relative stability of the battery pack 4 and the tray body 11 in the first direction Z.

The first packing belt 7 and the limit portions 5 can simultaneously limit the movement of the battery pack 4 in the first direction Z, the second direction Y, and the third direction X. The first packing belt 7 is installed after the battery pack 4 is placed, thereby the interference between the first packing belt and the battery pack can be avoided.

In some embodiments of the present application, at least one protective member 8 is provided for the packaging structure 100 for the battery pack. The protective member 8 is arranged at the periphery of the first buffer member 6. A part of the protective member 8 is lapped on the first buffer member 6 and is located between the first buffer member 6 and the first packing belt 7. The other part of the protective member 8 extends along the first direction Z and is located between the battery pack 4 and the first packing belt 7. Due to the fact that the first packing belt 7 is needed to be placed around the battery pack 4 and the tray body 11, at least a part of the first packing belt 7 comes into contact with a side of the battery pack 4 in the second direction Y or the third direction X, causing scratches, damage, and indentations on the paint surface of the battery pack 4. Therefore, the protective member 8 is provided to protect a side of the battery pack 4 in the second direction Y or the third direction X. In order to secure the protective member 8 between the first packing belt 7 and the battery pack 4, at least a part of the protective member 8 is located between the first buffer member 6 and the first packing belt 7, so as to fasten the protective member 8 through the fixing of the first packing belt 7 with the tray body 11 and the battery pack 4. In an embodiment of the present application, the protective member 8 is a corner protector. The periphery of the first buffer member 6 protrudes from the periphery of the battery pack 4, so that when the first packing belt 7 is fastened, the distance between the first packing belt 7 and the battery pack 4 is relatively large, further avoiding the situation where the first packing belt 7 scratches the paint surface of the battery pack 4 after the first packing belt 7 is fastened.

Referring to FIG. 2 and FIG. 5, the packaging structure 100 for the battery pack further includes a second buffer member 9. The second buffer member 9 is arranged between the battery pack 4 and the tray body 11. The second buffer member 9 can buffer and reduce shock of the battery pack 4 in the first direction Z. The second buffer member 9, in conjunction with the first buffer member 6, can simultaneously buffer both sides of the battery pack 4 in the first direction Z to enhance its cushioning and shock absorption capabilities. Both the first buffer member 6 and the second buffer member 9 are made of pearl cotton.

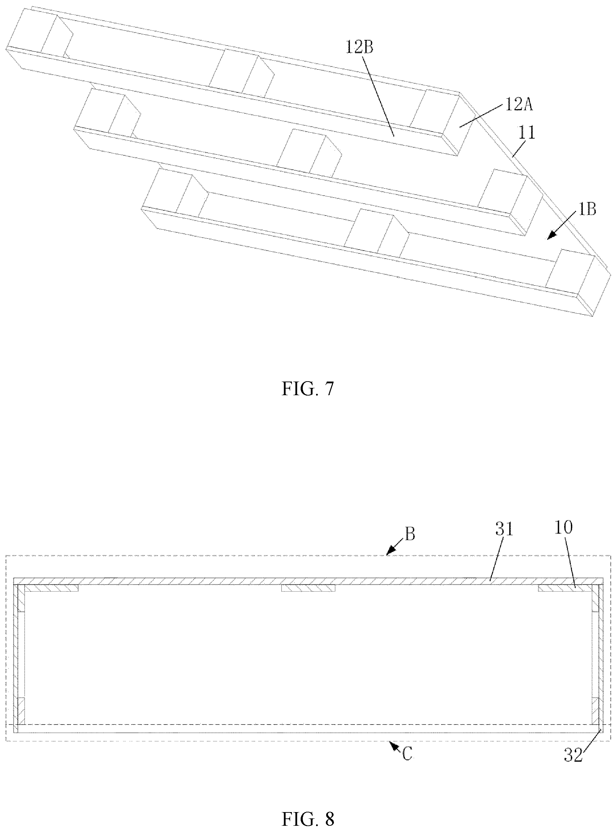

Referring to FIG. 3 and FIG. 7, the support portion 12 includes multiple support blocks 12A connected to the tray body 11. The multiple support blocks 12A are arranged in an array. At least a part of each of the support blocks 12A arranged close to the periphery of the tray body 11 protrudes from the periphery of the tray body 11 in the planar extension direction of the tray body 11. The support blocks 12A are configured to support the tray body 11. The multiple support blocks 12A are arranged in an array. That is, a gap is formed between adjacent two support blocks 12A to facilitate the insertion of forklift forks and the placement and transportation of the packaging structure 100 for the battery pack. At least a part of each support block 12A located close to the periphery of the tray body 11 protrudes from the periphery of the tray body 11, thereby the groove 2 on the tray structure 1 is formed. In an embodiment of the present application, nine support blocks 12A are arranged in an array along the plane where the second direction Y and the third direction X are located.

In some embodiments of the present application, the support portion 12 includes at least one first plate member 12B. The first plate member 12B extends along the second direction Y or the third direction X. Each first plate member 12B is arranged on a side, away from the tray body 11 in the first direction Z, of the multiple support blocks 12A. The multiple support blocks 12A arranged in the second direction Y or the third direction X are connected to each other through each first plate member 12B. In this embodiment, the multiple support blocks 12A are fixed through the first plate members 12B, thereby the support blocks 12A can be prevented from falling off during the loading and unloading process by the forklift.

Referring to FIG. 4, the packaging structure 100 for the battery pack further includes multiple second plate members 10. The multiple second plate members 10 are arranged on walls of the cavity 3A. The cover body 3 can be reinforced by the multiple second plate members 10 so that the structural strength of the cover body 3 is enhanced. In addition, the multiple second plate members 10 are arranged on walls of the cavity 3A but not to be exposed on the outside of cover body 3, thereby strengthening the structural strength of the cover body 3 and making the appearance of the cover body 3 flat.

Referring to FIG. 5, FIG. 6, and FIG. 8, the cover body 3 includes a first sub-part 31 and a second sub-part 32 that are interconnected. The multiple second plate members 10 are connected to the first sub-part 31, and at least a portion of the second sub-part 32 is lapped with the groove 2. In this embodiment, due to the lapping of a part of the cover body 3 with the groove 2, the multiple second plate members 10 are arrranged on the first sub-part 31 to avoid the assembly between the cover body 3 and the groove 2 from being interfered by the second plate members 10. In an embodiment of the present application, the cover body 3 includes two first side plates 14 arranged opposite to each other in the second direction Y and two second side plates 15 arranged opposite to each other in the third direction X. Five second plate members 10 are arranged on each of the first side plates 14 or each of the second side plates 15. Four of the five second plate members 10 located on each of the first side plates 14 or each of the second side plates 15 are in a shape of a rectangular frame structure. The remaining one of the five second plate members 10 is located in a middle position of the rectangular frame structure to strengthen the structural strength of the first side plates 14 or the second side plates 15. For ease of understanding, in FIG. 8, the frame indicated by the letter B is referred to the first sub-part 31, and the frame indicated by the letter C is referred to the second sub-part 32.

Referring to FIG. 8, in some embodiments of the present application, some second plate members 10 located in the first sub-part 31 are arranged close to the second sub-part 32, thereby the local structural strength of the cover body 3 is improved when the second sub-part 32 of the cover body 3 is embedded into the groove 2. It can be understood that some second plate members 10 located close to the second sub-part 32 can be arranged to contact or not contact the tray body 11 in the first direction Z when the cover body 3 is assembled with the tray structure 1.

Referring to FIG. 1, the packaging structure 100 for the battery pack further includes at least one second packing belt 13, which is arranged around the tray body 11 and the cover body 3. It can be understood that the movement between the cover body 3 and the tray body 11 in the second direction Y and the third direction X can be limited by the groove 2. After the assembly of the cover body 3 and the tray body 11, the cover body 3 and the tray body 11can be secured by wooden screws. When multiple packaging structures 100 of the battery pack are needed to be stacked and packed, in order to ensure the stability of multiple packaging structures 100 of the battery pack, the second packing belt 13 is provided to restrain the cover body 3 and the tray body 11. In an embodiment of the present application, four second packing belts 13 are provided and arranged in groups of two. The two groups of second packing belts 13 wrap around the tray body 11 and the battery pack 4 in the second direction Y and the third direction X respectively. The two second packing belts 13 in the same group are spaced apart from each other to ensure the stability of the cover body 3 in the first direction Z.

It should be noted that the battery pack 4 located between the cover body 3 and the tray body 11 is limited by the first packing belt 7 and multiple limiting parts 5 in the first direction Z, the second direction Y, and the third direction X, the first buffer member 6 and the second buffer member 9 protect and buffer the battery pack 4, and the protective member 8 can prevent the battery pack 4 from being scratched. Therefore, the surface of the battery pack 4 can be avoided from being scratched during long-distance transportation. At the same time, leakage, spontaneous combusting, and explosion of the battery pack 4 due to bumps during long-distance transportation can be avoided. With the groove 2, the cover body 3 and the tray structure 1 can be separated quickly, thereby the sealing steps of the packaging structure 100 of the battery pack can be reduced and product yield can be enhanced.

The embodiments of the present application also provide a method for assembling a battery pack, including the following steps:
S1: place the first buffer member 6 on the first side 1A of the tray body 11.
S2: place the battery pack 4 on a side, facing away from the tray body 11 in the first direction Z, of the second buffer member 9.
S3: place the first buffer member 6 on a side, facing away from the tray body 11 in the first direction Z, of the battery pack 4.
S4: place multiple protective members 8 on a side, facing away from the battery pack 4 in the first direction Z, of the first buffer member 6.
S5: place multiple limit portions 5 on the periphery of the battery pack 4 in the second direction Y and the third direction X, and secure the multiple limit portions 5 to the tray body 11.
S6: secure the battery pack 4 to the tray body 11 through the first packing belt 7.
S7: cover the tray body 11 with the cover body 3 and secure the tray body 11 and the cover body 3 with wooden screws.

It can be understood that in step S7, if multiple packaging structures 100 for the battery pack are needed to be transported, a second packing belt 13 is also required to further secure the cover body 3 and the tray body 11.

## Claims

1. A packaging structure for a battery pack, **characterized in that** the packaging structure for a battery pack comprises:
a tray structure (1) comprising a tray body (11) and a support portion (12), the tray body (11) comprising a first side (1A) and a second side (1B) opposite to the first side (1A) in a first direction, the tray body (11) extending along a plane where a second direction and a third direction are located; the first side (1A) of the tray body (11) being configured for installing a battery pack (4); the support portion (12) being fixedly connected to the second side (1B) of the tray body (11), at least a part of the support portion (12) protruding from a periphery of the tray body (11) in a planar extension direction of the tray body (11); the support portion (12) cooperating with the tray body (11) to form a groove (2) located at the periphery of the tray body (11); and the first direction, the second direction, and the third direction intersecting with each other in pairs; and
a cover body (3) arranged on the first side (1A) of the tray body (11), a cavity (3A) being formed on a side, facing the tray body (11), of the cover body (3), the battery pack (4) being located on the first side (1A) of the tray body (11) and being accommodated in the cavity (3A), at least a part of the cover body (3) being lapped with the groove (2), and the tray body (11) being accommodated in the cavity (3A).

2. The packaging structure for the battery pack according to claim 1, wherein the packaging structure for the battery pack further comprises a plurality of limit portions (5), the plurality of limit portions (5) are fixed to the first side (1A) of the tray body (11) and configured for limiting movement of the battery pack (4).

3. The packaging structure for the battery pack according to claim 2, wherein each of the plurality of limit portions (5) is arranged on a periphery of the battery pack (4); and
wherein every two adjacent limit portions (5) are spaced apart.

4. The packaging structure for the battery pack according to claim 1, wherein the packaging structure for the battery pack further comprises:
a first buffer member (6) located on a side, away from the tray body (11) in the first direction, of the battery pack (4), and
at least one first packing belt (7) arranged around the tray body (11) and the battery pack (4), and the first buffer member (6) being located between the first packing belt (7) and the battery pack (4).

5. The packaging structure for the battery pack according to claim 4, wherein the packaging structure for the battery pack further comprises at least one protective member (8), the protective member (8) is arranged at a periphery of the first buffer member (6), a part of the protective member (8) is lapped on the first buffer member (6) and located between the first buffer member (6) and the first packing belt (7), and another part of the protective member (8) extends along the first direction and is located between the battery pack (4) and the first packing belt (7).

6. The packaging structure for the battery pack according to claim 4, wherein the first buffer member (6) protrudes from the periphery of the battery pack (4).

7. The packaging structure for the battery pack according to claim 1, wherein the packaging structure for the battery pack further comprises a second buffer member (9), and the second buffer member (9) is arranged between the battery pack (4) and the tray body (11).

8. The packaging structure for the battery pack according to any one of claims 1-7, wherein the support portion (12) comprises a plurality of support blocks (12A) connected to the tray body (11), the plurality of support blocks (12A) are arranged in an array, at least a part of each of the support blocks (12A) arranged close to the periphery of the tray body (11) protrudes from the periphery of the tray body (11) in the planar extension direction of the tray body (11).

9. The packaging structure for the battery pack according to claim 8, wherein the support portion (12) further comprises at least one first plate member (12B), the first plate member (12B) extends along the second direction or the third direction, each first plate member (12B) is arranged on a side, away from the tray body (11) in the first direction, of the plurality of support blocks (12A), the plurality of support blocks (12A) arranged in the second direction or the third direction are connected to each other through each first plate member (12B).

10. The packaging structure for the battery pack according to any one of claims 1-7, wherein the packaging structure for the battery pack further comprises a plurality of second plate members (10), the plurality of second plate members (10) are arranged on a wall of the cavity (3A).

11. The packaging structure for the battery pack according to claim 10, wherein the cover body (3) comprises a first sub-part (31) and a second sub-part (32) connected to each other, the plurality of second plate members (10) are connected to the first sub-part (31), and at least a part of the second sub-part (32) is lapped in the groove (2).

12. The packaging structure for the battery pack according to claim 11, wherein at least one of the second plate members (10) is arranged close to the second sub-part (32).

13. The packaging structure for the battery pack according to any one of claims 1-12, wherein the packaging structure for the battery pack further comprises at least one second packing belt (13) arranged around the tray body (11) and the cover body (3).
